# EUROPEAN PATENT SPECIFICATION

(11) **EP 2 542 996 B1**
(45) Date of publication and mention of the grant of the patent: **10.12.2014**
(21) Application number: 11751466.1
(22) Date of filing: 04.03.2011
(51) Int. Cl.: G06F 21/00, G06F 17/00, H04L 29/06

(54) **Input parameter filtering for web application security**
Eingabeparameterfilterung für die Sicherheit von Webanwendungen
Filtrage de paramètre d'entrée pour sécurité d'application web

(30) Priority: 05.03.2010 US 718092
(43) Date of publication of application: 09.01.2013
(73) Proprietor: Successfactors, Inc., San Mateo, California 94404 (US)
(72) Inventor: ICHNOWSKI, Jeffrey, San Francisco, California 94115 (US)
(74) Representative: Müller-Boré & Partner Patentanwälte PartG mbB
(86) International application number: PCT/US2011/027281
(87) International publication number: WO 2011/109766

(56) References cited:
- EP-A2- 1 924 050
- JP-A- 2008 097 145
- KR-A- 20090 095 020
- US-A1- 2003 033 545
- US-A1- 2009 007 253
- US-A1- 2009 007 253
- US-A1- 2009 119 769

## Description

### BACKGROUND OF THE INVENTION

### Field of the Invention

Embodiments of the invention generally relate to web-based applications. More specifically, embodiments of the invention relate to techniques for filtering input parameters to enhance web application security.

### Description of the Related Art

A web application generally refers to a software application accessed over a network such as the internet using a web browser (or specialized client application). Examples of web applications include applications hosted by a browser (such as a Java applet) or written using a scripting language (such as JavaScript). In a web browser environment, requests are sent by a client to a server, which processes the request, and generates a response sent back to the client, typically an HTML document used to render an interface to the application on the client. Well known examples of web applications include web-based email services, online retail sales and auction sites.

Frequently, web applications allow a user interacting with a client to supply input data, such as form fields allowing a user to enter a username and password to logon to a web application, or less structured information, such as rich text providing a user's review of a product sold on a website. Other examples include posts on a web based forum, email displayed in a browser, advertisements, stock quotes provided in a feed, and form data, among other things. The data for these fields may be sent to a server as part of an HTTP post message for an HTML form element or as parameters passed as part of a URL string. Typically, the input parameters provide data for the web application to process in some way. However, because a web application may be configured to process input data from any source (e.g., anyone with an internet connection can access a retail web site), web based forms and URL parameters have become a well-known vector for a person to disrupt or compromise a web application. For example, a malicious person may try to break the web-application or access stored data by carefully crafting input data that results in improper output handling when the input data is presented as output. Often, this type of security vulnerability causes input data to be executed in some way by the server (e.g., as a part of an SQL query) when it is subsequently processed as output.

Examples of this type of attack include cross-site scripting, SQL injection, HTTP header injection, among others. Cross-site scripting is a security vulnerability in which input data is passed to the output in such a way as to have it executed as code instead of presented as data. For example, if a user types in "<script>alert(document.cookie)</script>" as a form element and the server renders this back in an HTML page unmodified, the browser executes the script and displays the browser's cookie in a new window. Typically, this is prevented by either removing known attack vectors (e.g. looking for the "<script>" tag) or escaping attack vectors into safe forms. Similarly, SQL injection is a form of attack in which user data is interpreted as database instructions. This is typically prevented by escaping the output to ensure it is not executed, or by "binding" the inputs as data to a query. However, both these approaches rely on each component of a web application which process untrusted input data to guard against these vulnerabilities, and to do so correctly.

The document US2009/119769 discloses a reflected cross-site scripting (XSS) mitigation technique that can be implemented wholly on the client by installing a client-side filter that prevents reflected XSS vulnerabilities. XSS filtering performed entirely on the client-side enables web browsers to defend against XSS involving servers which may not have sufficient XSS mitigations in place. The technique accurately identifies XSS attacks using carefully selected heuristics and matching suspect portions of URLs and POST data with reflected page content. The technique used by the filter quickly identifies and passes through traffic which is deemed safe, keeping performance impact from the filter to a minimum. Non-HTML MIME types can be passed through quickly as well as requests which are same-site. For the remaining requests, regular expressions are not run across the full HTTP response unless XSS heuristics are matched in the HTTP request URL or POST data.

### SUMMARY OF THE INVENTION

The invention is defined in the independent claims. Particular embodiments are set out in the dependent claims.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 illustrates a computing infrastructure configured for input parameter filtering for web application security, according to one embodiment of the invention.
Figure 2 is a more detailed view of the client computing system of Figure 1, according to one embodiment of the invention.
Figure 3 is a more detailed view of the server computing system of Figure 1, according to one embodiment of the invention.
Figure 4 illustrates a method for filtering input parameters to enhance web application security, according to one embodiment of the invention.
Figure 5 illustrates an example of parameter input filtering for web application security, according to one embodiment of the invention.

### DETAILED DESCRIPTION

Embodiments of the invention provide techniques for enhancing the security of a web application by using input filtering. In particular, an input filter may be configured to process untrusted input data, character by character, and to replace certain characters in text-based input with visually similar characters. This approach may be used to block a specified list of "triggering" characters as they come in and replace them with characters similar in appearance but without the syntactic meaning that triggers an attack or otherwise exploits a vulnerability in a web-application. Thus, when rendered back, the content appears virtually unchanged, but inputs representing an attack of some form (e.g., an SQL injection attack) are prevented.

Replacing a small set of triggering characters improves application security as many improper output handling attacks are initiated using a small set of characters. For example, an unfiltered less-than sign "<" is used to initiate most cross-site scripting attacks as the first character in a <script> tag. At the same time, all standard HTTP parameters (inputs from an HTML form element or parameters passed in a URL string) are sent by a web-browser in a uniform, easily observable and modifiable form - as a sequence of encoded Unicode character values. Further, the triggering characters (e.g., an <) have an appearance similar to another Unicode character with a different code-point. For example, the less-than sign at Unicode code-point U+003C when rendered to screen or print looks like (<) and is similar in appearance to the character ()at Unicode code-point U+2039 and the single quote character (') at U+003E is similar in appearance to the Unicode character (') at U+2019. While visually similar in appearance, the replacement characters do not have the triggering effect caused by the characters being replaced (i.e., the replacement characters do not result in an input character string being interpreted as instructions that should be executed. Of course, one of skill in the art will recognize that Unicode provides just one example of a character encoding scheme and that embodiments of the invention may be adapted for use with a variety of other encoding schemes, including multi-byte and variable-byte encoding schemes.

In one embodiment, a filter is deployed between the client and server and monitors all incoming parameters. For example, in a particular embodiment, the input parameter filter may be implemented as a Java 2 Enterprise Edition Servlet Filter object. Alternatively however, the input parameter filter may be implemented using an alternate framework's equivalent of the Servlet Filter, as a proxy or using aspect oriented coding techniques. As input data is received from any client, each parameter has any triggering characters replaced with the character similar in appearance. Some fields may be "white-listed," allowing any triggering characters to be passed through unmodified, as for example rich-text inputs might include HTML code. Of course, other processes may be used to evaluate the content of such a field. For example, the markup tags in fields identified as storing rich text may be evaluated to identify and remove certain specified tags, e.g., to remove <script> tags while leaving text formatting tags such as <b>, <u>, and <i>.

In the following, reference is made to embodiments of the invention. However, it should be understood that the invention is not limited to specific described embodiments. Instead, any combination of the following features and elements, whether related to different embodiments or not, is contemplated to implement and practice the invention. Furthermore, although embodiments of the invention may achieve advantages over other possible solutions and/or over the prior art, whether or not a particular advantage is achieved by a given embodiment is not limiting of the invention. Thus, the following aspects, features, embodiments and advantages are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

Further, a particular embodiment of the invention is described using an input parameter filter implemented as a Java 2 Enterprise Edition Servlet Filter object and an application server configured process an HTML form which includes a user's name and email address formatted as a Unicode character string. However, it should be understood that the invention may be adapted for a broad variety of web application servers, web application frameworks, and character sets where data is supplied from a client as a string (e.g., as data supplied as part of an HTTP post message for an HTML form element or as parameters passed as part of a URL string). Accordingly, references to this particular example embodiment are included to be illustrative and not limiting.

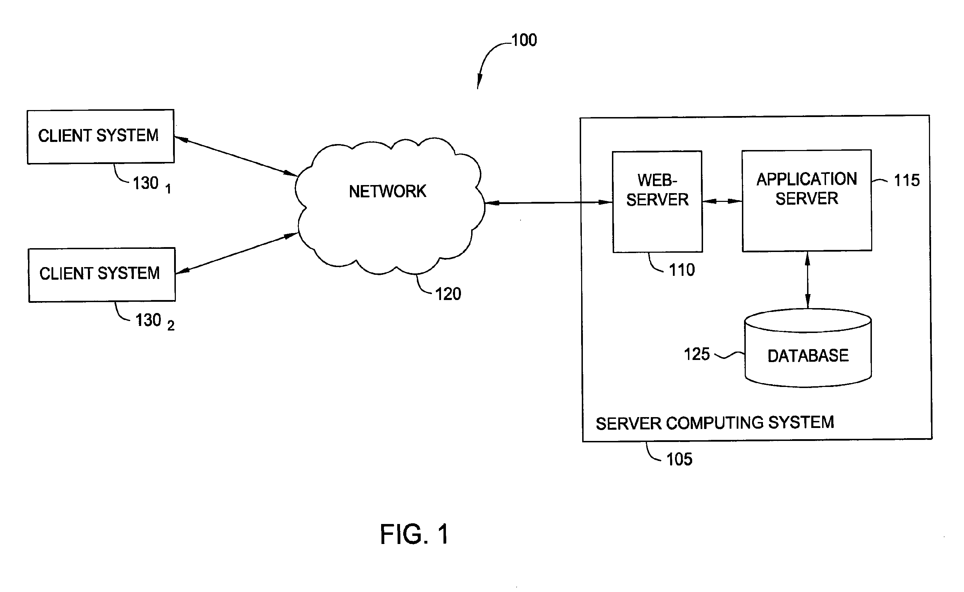

Figure 1 illustrates a computing infrastructure configured for input parameter filtering for web application security, according to one embodiment of the invention. As shown, the computing infrastructure 100 includes a server computer system 105 and a plurality of client systems 130₁₋₂, each connected to a communications network 120. And the server computer 105 includes a web server 110, an application server 115 and a database 125.

In one embodiment, each client system 130₁₋₂ communicates over the network 120 to interact with a web application provided by the server computer system 105. Each client 130₁₋₂ may include web browser software used to create a connection with the server system 105 and to receive and render an interface to the web application. For example, the web server 110 may receive a URL in an HTTP request message and pass the URL to the application server 115. In turn, the application server 115 generates a response formatted as an HTML document, returns it to the web server 110, which then returns the response to the requesting client.

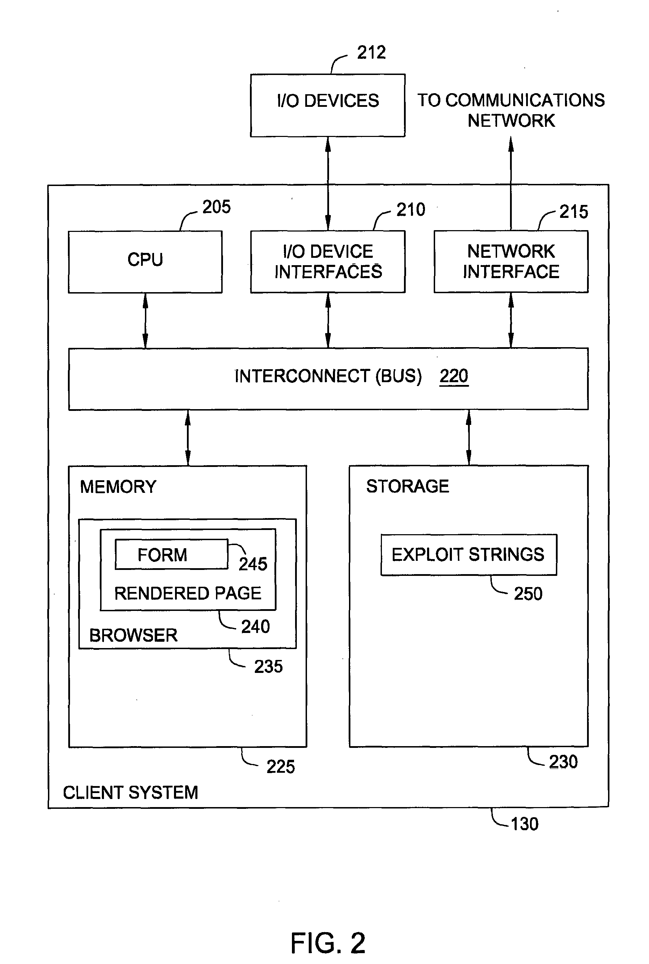

Figure 2 is a more detailed view of the client computing system 130 of Figure 1, according to one embodiment of the invention. As shown, the client computing system 130 includes, without limitation, a central processing unit (CPU) 205, a network interface 215, an interconnect 220, a memory 225, and storage 230. The computing system 105 may also include an I/O devices interface 210 connecting I/O devices 212 (e.g., keyboard, display and mouse devices) to the computing system 105.

The CPU 205 retrieves and executes programming instructions stored in the memory 225. Similarly, the CPU 205 stores and retrieves application data residing in the memory 225. The interconnect 220 is used to transmit programming instructions and application data between the CPU 205, I/O devices interface 210, storage 230, network interface 215, and memory 225. CPU 205 is included to be representative of a single CPU, multiple CPUs, a single CPU having multiple processing cores, and the like. And the memory 225 is generally included to be representative of a random access memory. Storage 230, such as a hard disk drive or flash memory storage drive, may store non-volatile data.

Illustratively, the memory 225 includes a web browser application 235, which itself includes a rendered page 240 and the storage 230 stores a set of exploit strings 250. As noted above, the browser 235 provides a software application which allows a user to access a web application hosted on a server. The rendered page 240 corresponds to the HTML content obtained from the server and rendered by the browser 235. In this case, the rendered page 240 includes a form 245. As a simple example, assume the form 240 on the rendered page 245 provides two input fields allowing a user to register a name and email address with an online retailer. When the form 245 is submitted, the application server stores the inputs in a database.

The application server could also create a response handed back to the browser 235 on the client 130 which includes the content submitted by the user. For example, the application server could generate a simple web page with the following content to be sent to the client:
thank you [person name] for registering, we will send alert messages to [submitted email].
Another application could, e.g., periodically send email messages to each registered person listing items for sale on the online retailer's web site. However, if the inputs are not properly escaped, a malicious person could cause a database on the server to execute an arbitrary SQL statement using an appropriately crafted exploit string 250. That is, a malicious person could use the form 245 as a platform for launching an SQL injection attack. To address this scenario, in one embodiment, an input parameter filter may be used to evaluate the strings included in the form and replace a set of triggering characters prior to the input fields being passed to and processed by the application server.

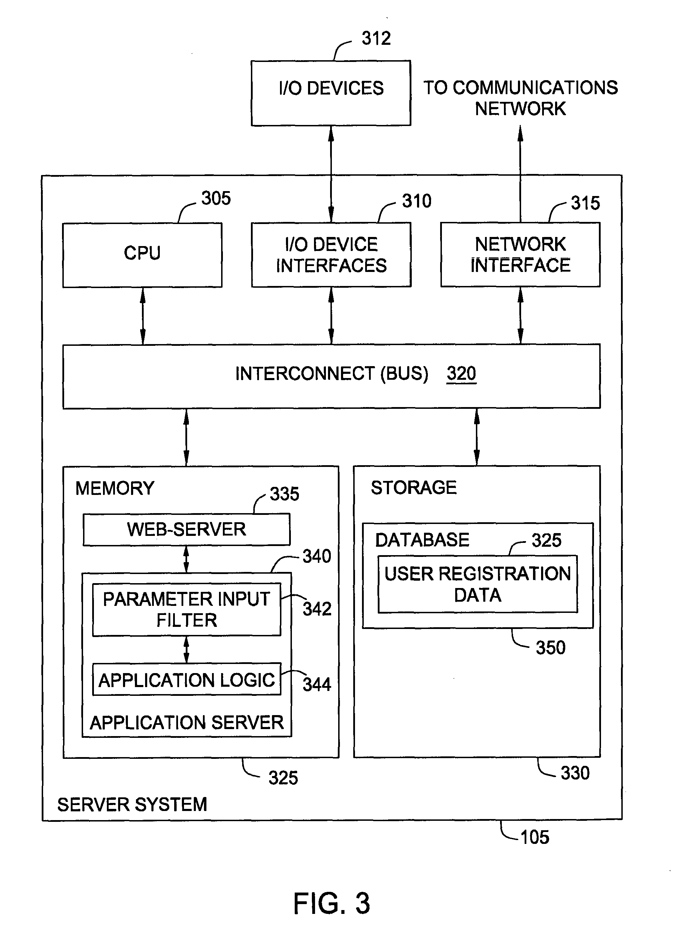

Figure 3 is a more detailed view of the server computing system 105 of Figure 1, according to one embodiment of the invention. As shown, server computing system 105 includes, without limitation, a central processing unit (CPU) 305, a network interface 315, an interconnect 320, a memory 325, and storage 330. The client system 130 may also include an I/O device interface 310 connecting I/O devices 312 (e.g., keyboard, display and mouse devices) to the server computing system 105.

Like CPU 205 of Figure 2, CPU 305 is configured to retrieve and execute programming instructions stored in the memory 325 and storage 330. Similarly, the CPU 305 is configured to store and retrieve application data residing in the memory 325 and storage 330. The interconnect 320 is configured to move data, such as programming instructions and application data, between the CPU 305, I/O devices interface 310, storage unit 330, network interface 305, and memory 325. Like CPU 205, CPU 305 is included to be representative of a single CPU, multiple CPUs, a single CPU having multiple processing cores, and the like. Memory 325 is generally included to be representative of a random access memory. The network interface 315 is configured to transmit data via the communications network 120. Although shown as a single unit, the storage 330 may be a combination of fixed and/or removable storage devices, such as fixed disc drives, floppy disc drives, tape drives, removable memory cards, optical storage, network attached storage (NAS), or a storage area-network (SAN).

As shown, the memory 325 stores a web-server 335 and an application server 340, and the storage 330 includes a database 350 storing user registration data 352. The application server 340 itself includes a parameter input filter 342 and application logic 344. The web-server 335 is generally configured to respond to requests from clients, such as the web-browser 240 of Figure 2.

Continuing with the example of a web form 245 used to register a user's name and email address, the contents are transmitted to the web server 335 as an HTTP post message when the user submits the web form 245. More specifically, the text entered by a user in a "name" field and an "email" field may be transmitted as input parameters to the application server 350, formatted as Unicode text strings. Once received, the web-server 335 hands the contents of the HTTP post message to the application server 340 for processing. The application logic 344 generally implements whatever functionality is provided by a given web application. For example, the application logic 344 may be configured to take the username and email address and store them in the database 350 as en element of the user registration data 352. As noted above, another application may subsequently query the database for name and email address pairs to construct an email message to each registered person.

However, prior to passing the input parameters to the application logic 344 for processing, in one embodiment, the parameter input filter 342 first evaluates the contents of each input parameter to identify and replace any occurrences of a specified set of triggering characters. In particular, each triggering character may be replaced with a Unicode character having a similar visual appearance, but a different Unicode code point. Doing so may prevent input data from being inappropriately executed. That is, doing so may help prevent a variety of exploit attempts such as, cross-site scripting, SQL injection, HTTP header injection, among others, as the input parameters passed to the application logic 344 no longer include the actual triggering characters, but instead include the visually equivalent ones.

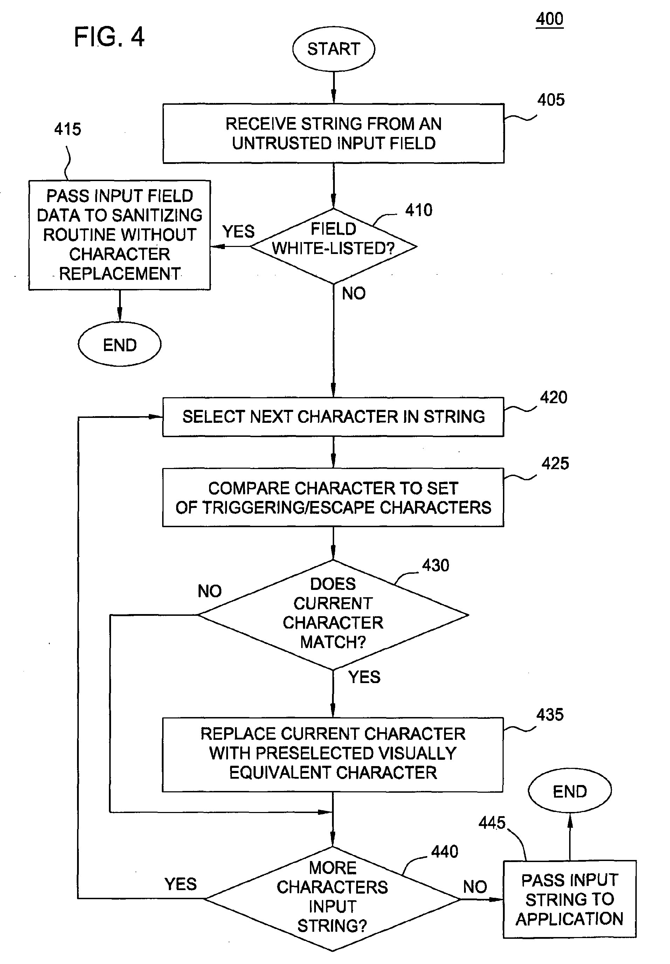

The operations of the parameter input filter 342 are more fully described with respect to Figure 4. Specifically, Figure 4 illustrates a method 400 for filtering input parameters to enhance web application security, according to one embodiment of the invention. The parameter input filter 342 may perform the method 400 for each input submitted by a client. As shown, the method 400 begins at step 405, where an application server receives a text string from an untrusted input field. For example, the text string may have been submitted as a form element in an HTTP post message or a URL with a sequence of one or more parameters following a "?" character. At step 410, the parameter input filter 342 may determine whether the field associated with the untrusted input string received at step 405 has been "white-listed." That is, whether the field has been identified as one that may include triggering characters, e.g., as part of rich-text input. If so, then at step 415, the content of the field may be passed to a sanitizing routine without any triggering character replacement. The sanitizing routine may evaluate markup tags in rich text and allow some, (such as text formatting tags) while deleting others (such as <script>...</script> tags).

Otherwise, following step 410, a loop begins where each character in the string is compared to a set of triggering characters and any occurrences of the triggering characters are replaced with visually similar characters. The loop begins at step 420, where the parameter input filter 342 selects the next character in the string. And at step 425, the character is compared to a set of triggering characters. If a match is found (step 430), then the character is replaced with a visually equivalent character (step 435). As noted above, each triggering character may be replaced with a Unicode character having a similar visual appearance, but a different Unicode code point. Table I, below, lists an example of a set of triggering characters along with the corresponding replacement characters from the Unicode code set.

**Table I - Triggering Characters and Replacement Characters**

| Triggering Character | | Replacement Character | | Description |
|---|---|---|---|---|
| Char | Unicode | Char | Unicode | |
| < | U+003C | ^{<} | U+2039 | The less-than sign can be used to start HTML tags, such as <script>, <object>, <embed> that can introduce cross-site-scripting attacks. |
| > | U+003E | ^{>} | U+203A | The greater-than sign is used in conjunction with the less-than-sign for many cross-site-scripting attacks. |
| ' | U+0027 | ^{'} | U+2019 | The single-quote can be used to introduce SQL Injection and cross-site scripting in HTML attributes. |
| " | U+0022 | ^{"} | U+201 C | The double-quote can be used to introduce cross-site-scripting in HTML attributes |
| & | U+0026 | _{&} | U+FE60 | The ampersand is an escape character in HTML that could be used to introduce entity escapes. It is also used as a parameter separator in URL queries. |
| % | U+0025 | _{%} | U+FE6A | The percent sign is the escape character for URL queries. It can potentially be used to double-encode sequences to get past other input validation steps. |
| (NULL) | U+0000 | (space) | U+0020 | The null character (Unicode/ASCII 0) can be used to terminate strings in certain contexts. |
| Control characte rs | U+0001 to U+0019 | (space) | U+0020 | With the exception of a few characters in this range (such as newline, linefeed and tab), there is little reason to pass the characters on to the application. |
| (CR) and (LF) | U+000E U+000A | (space) | U+0020 | In some contexts it may make sense to remove these characters as well. They can be used to split headers in HTTP for example. |

Of course, the characters listed in Table I are listed to be representative of a triggering character set, and the actual characters included in a triggering character set may be tailored to suit the needs of a particular case. Further, although the replacement characters shown in Table I are visually similar to the character being replaced, in some cases there may be an visually identical character in the code set. In such a case, the visually identical character may be used as the replacement character.

Following step either step 430 (if the current character does not match any character in the triggering set) or step 435 (if a match is found), the parameter input filter 342 determines whether there are more characters in the input string to evaluate (step 440). If so, the method 400 returns to step 420, where the parameter input filter 342 selects the next character to evaluate. Otherwise, at step 445, the parameter input filter 342 passes the input string received at step 405 - with any triggering characters having been replaced with visually similar characters - to the application logic 344 for processing.

An example of the inner loop of steps 420-440 is shown below for a triggering set which includes printing characters { <, >, ', ", &, %} and the non printing characters of return, linefeed, and NULL (each replaced with a space).

### Table II - Code Example

```
 String filter(final String value) {
    char[ ] result = value.toCharArray();
    boolean changed = false;
    for (int i=0, n=result.length ; i<n ; ++i) {
      switch (result[i]) {
      case '<':
        result[i] = '\u2039';
        break;
      case '>':
        result[i] = '\u203a';
        break;
      case '\":
        result[i] = '\u2019';
        break;
      case '\"':
        result[i] ='\u201c';
        break;
      case '&':
        result[i] = '\ufe60';
        break;
      case '%':
        result[i] = '\ufe6a';
        break;
      case '\r':
      case '\n':
      case '\0':
        result[i] = ' ';
        break;
      default:
        // This character is not replaced, continue to next
        // iteration without setting "changed = true" below.
        continue;
      }
      changed = true;
    }
   // Only allocate a new string if the value changed during the
   // loop. Otherwise, return the original string unchanged.
    return changed ? new String(result) : value;
 }
```

Of course, one of ordinary skill in the art will recognize that the parameter input filter may be implemented using a variety of programming techniques in addition to the one shown in Table II.

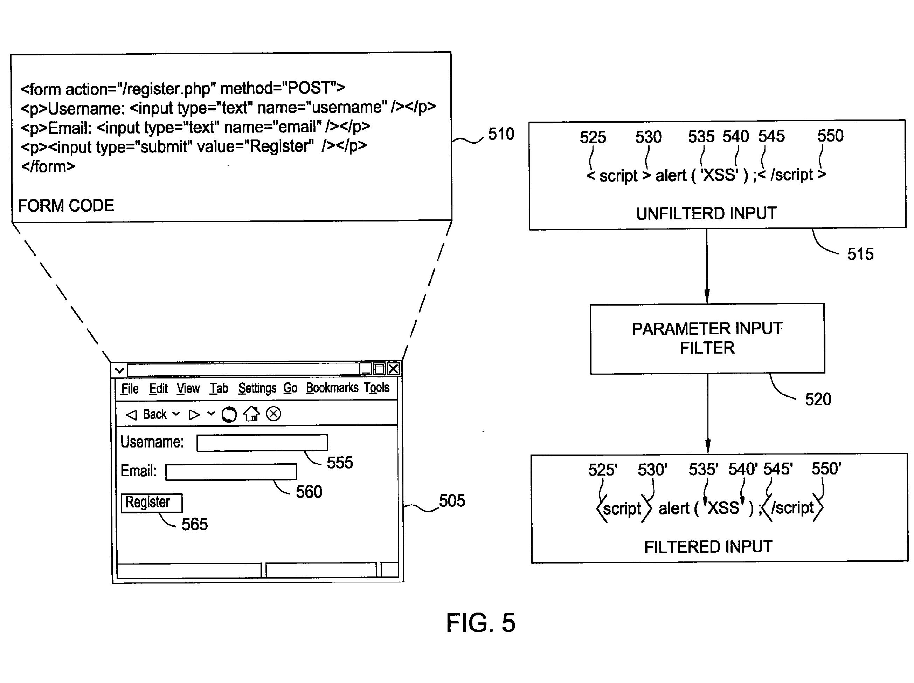

Figure 5 illustrates an example of parameter input filtering for web application security, according to one embodiment of the invention. More specifically, Figure 5 illustrates an example of a web form 505 which includes two input fields - a user name field 555 and an email address field 560. A button 565 is used to submit the form 505 to an application server. Figure 5 also shows a portion of HTML markup 510 from which the form 505 is rendered. Once a user enters text in the fields 555 and 560, the form data is sent to the application server using the HTTP POST method. For this example, assume that a malicious user attempts to exploit a cross site scripting vulnerability by submitting the following text using one of the input fields 555 and 560: "<script>alert('XSS ');</script>." This is shown in Figure 5 as unfiltered input 515. Illustratively, input 515 includes triggering characters 525, 530, 535, 540, 545, and 550. The input is passed to parameter input filter 520, which replaces each triggering character with a corresponding, visually similar character using the techniques discussed above. Filtered input 515' shows the results of processing this input text using the parameter input filter 520. Specifically, each triggering character 530, 535, 540, 545, and 550 has been replaced with a visually similar character 530', 535', 540', 545', and 550'. Thus, the input field retains the same semantic content when rendered on a display or evaluated by a user - but no longer has the syntactic form which causes the web browser to execute the contents of the <script> element in unfiltered input 515'. That is, when rendered back, filtered input 515' appears virtually unchanged, but inputs representing an attack (e.g., the cross site scripting attack in unfiltered input 515) are prevented.

In sum, embodiments of the invention provide techniques for enhancing the security of a web application by using input filtering. In particular, an input filter may be configured to process untrusted input data, character by character, and to replace certain characters in text-based input with visually similar characters. While visually similar in appearance, the replacement characters do not have the triggering effect caused by the characters being replaced (i.e., the replacement characters do not result in an input character string being interpreted as instructions that should be executed). Thus, in one embodiment, the parameter input filter may be used to block a specified list of "triggering" characters as they come in and replace them with characters similar in appearance but without the syntactic meaning that triggers an attack or otherwise exploits a vulnerability in a web-application. Further, by processing input fields included in any HTTP post message or URL string passed to an application server, developers can focus on application functionality instead of ensuring that any inputs passed to the application server are property sanitized.

While the forgoing is directed to embodiments of the present invention, other and further embodiments of the invention may be devised without departing from the basic scope thereof. For example, aspects of the present invention may be implemented in hardware or software or in a combination of hardware and software. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Such computer-readable storage media, when carrying computer-readable instructions that direct the functions of the present invention, are embodiments of the present invention.

In view of the foregoing, the scope of the present invention is determined by the claims that follow.

## Claims

1. A computer-implemented method (400) for filtering one or more input parameters (515) provided to an application server (115, 340), the method comprising:
receiving a first string of characters from one of the input parameters (405);
comparing each character in the first string of characters with a set of triggering characters (525, 530, 535, 540, 545, 550), wherein each character in the set of triggering characters has a syntactic meaning operable to exploit a vulnerability in a web-based application, and wherein each triggering character has an associated non-triggering replacement character (525', 530', 535', 540', 545', 550') which has a visual appearance that matches the associated triggering character (420) without said syntactic meaning;
generating a modified first string of characters by replacing each character in the first string of characters which matches one of the triggering characters with the associated non-triggering replacement character (435); and
passing the modified first string of characters to the application server (445).

2. The method (400) of claim 1, wherein each triggering character (525, 530, 535, 540, 545, 550) has a code point in a character set different than the associated non-triggering replacement character (525', 530', 535', 540', 545', 550').

3. The method (400) of claim 1, wherein the one or more input parameters are provided to the application server (340) as a Unicode text string posted from an HTML form or provided to the application server as a URL string.

4. The method (400) of claim 1, further comprising:
generating, by the application server (340), a response which includes the modified first string of characters; and
sending the response to a client (130).

5. The method (400) of claim 1, further comprising:
receiving a second string of characters from a second one of the input parameters; and
passing the second string of characters to an input parameter sanitizing application (415).

6. The method (400) of claim 5, wherein the second string of characters comprises rich text including one or more markup tags, and wherein the sanitizing application is configured to evaluate and selectively delete specified tags from the one or more markup tags.

7. The method (400) of claim 1, wherein the first string of characters includes an attempt to exploit a vulnerability of the application server (340).

8. The method (400) of claim 7, wherein the vulnerability is one of a cross site scripting vulnerability, an SQL injection vulnerability, and an HTTP header injection vulnerability.

9. A system (105), comprising:
one or more computer processors (305); and
a memory (325) containing a program, which when executed by the one or more computer processors is configured to perform an operation for filtering one or more input parameters provided to an application server (340), the operation comprising:
receiving a first string of characters from one of the input parameters (405);
comparing each character in the first string of characters with a set of triggering characters (525, 530, 535, 540, 545, 550), wherein each character in the set of triggering characters has a syntactic meaning operable to exploit a vulnerability in a web-based application, and wherein each triggering character has an associated non-triggering replacement character (525', 530', 535', 540', 545', 550') which has a visual appearance that matches the associated triggering character (420) without said syntactic meaning;
generating a modified first string of characters by replacing each character in the first string of characters which matches one of the triggering characters with the associated non-triggering replacement character (435); and
passing the modified first string of characters to the application server (445).

10. The system (105) of claim 9, wherein each triggering character (525, 530, 535, 540, 545, 550) has a code point in a character set different than the associated non-triggering replacement character (525', 530', 535', 540', 545', 550').

11. The system (105) of claim 9, wherein the one or more input parameters are provided to the application server (340) as a Unicode text string posted from an HTML form or provided to the application server as a URL string.

12. The system (105) of claim 9, wherein the operation further comprises:
generating, by the application server (340), a response which includes the modified first string of characters; and
sending the response to a client (130).

13. The system (105) of claim 9, wherein the operation further comprises:
receiving a second string of characters from a second one of the input parameters; and
passing the second string of characters to an input parameter sanitizing application (415).

14. The system (105) of claim 13, wherein the second string of characters comprises rich text including one or more markup tags, and wherein the sanitizing application is configured to evaluate and selectively delete specified tags from the one or more markup tags.

15. The system (105) of claim 9, wherein the first string of characters includes an attempt to exploit a vulnerability of the application server (340).

## Patentansprüche

1. Computerimplementiertes Verfahren (400) zum Filtern eines oder mehrerer Eingabeparameter (515), die einem Anwendungsserver (115, 340) bereitgestellt werden, wobei das Verfahren umfasst:
Empfangen einer ersten Zeichenkette aus einem der Eingangsparameter (405);
Vergleichen jedes Zeichens in der ersten Zeichenkette mit einem Satz von Trigger- bzw. Ansteuerzeichen (525, 530, 535, 540, 545, 550), wobei jedes Zeichen in dem Satz von Ansteuerzeichen eine syntaktische Bedeutung hat, die betriebsfähig ist, um eine Verwundbarkeit in einer webbasierten Anwendung auszuwerten, und wobei jedes Ansteuerzeichen ein zugehöriges Nicht-Ansteuerungsersatzzeichen (525', 530', 535', 540', 545', 550') hat, welches ein visuelles Erscheinungsbild hat, das mit dem zugehörigen Ansteuerzeichen (420) ohne die syntaktische Bedeutung übereinstimmt;
Erzeugen einer modifizierten ersten Zeichenkette durch Austauschen jedes Zeichens in der ersten Zeichenkette, das mit einem der Ansteuerzeichen übereinstimmt, durch das zugehörige Nicht-Ansteuerungsersatzzeichen (435); und
Weitergeben der modifizierten ersten Zeichenkette an den Anwendungsserver (445).

2. Verfahren (400) nach Anspruch 1, wobei jedes Ansteuerzeichen (525, 530, 535, 540, 545, 550) einen Codepunkt in einem Zeichen hat, der verschieden zu dem zugehörigen Nicht-Ansteuerungsersatzzeichen (525', 530', 535', 540', 545', 550') festgelegt ist.

3. Verfahren (400) nach Anspruch 1, wobei der eine oder die mehreren Eingabeparameter dem Anwendungsserver (340) als Unicode-Textzeichenkette, die in einer HTML-Form abgeschickt wurde, oder dem Anwendungsserver als eine URL-Zeichenkette zur Verfügung gestellt werden.

4. Verfahren (400) nach Anspruch 1, das ferner umfasst:
Erzeugen einer Antwort, welche die modifizierte erste Zeichenkette umfasst, durch den Anwendungsserver (340); und
Senden der Antwort an ein dienstanforderndes Gerät bzw. einen Client (130).

5. Verfahren (400) nach Anspruch 1, das ferner umfasst:
Empfangen einer zweiten Zeichenkette aus einem zweiten der Eingabeparameter; und
Weitergeben der zweiten Zeichenkette an eine Anwendung zur Eingangsparametersäuberung (415).

6. Verfahren (400) nach Anspruch 5, wobei die zweite Zeichenkette Richt-Text mit einem oder mehreren Markup-Tags bzw. Auszeichnungsmarkierungen umfasst, und wobei die Säuberungsanwendung konfiguriert ist, um spezifizierte Markierungen von der einen oder den mehreren Auszeichnungsmarkierungen auszuwerten und selektiv zu löschen.

7. Verfahren (400) nach Anspruch 1, wobei die erste Zeichenkette einen Versuch umfasst, eine Verwundbarkeit des Anwendungsservers (340) auszuwerten.

8. Verfahren (400) nach Anspruch 7, wobei die Verwundbarkeit eine Verwundbarkeit gegenüber Cross-Site bzw. webseitenübergreifendem Scripting, eine Verwundbarkeit gegen SQL Injection bzw. SQL-Einschleusung und eine Verwundbarkeit gegen http-Header-Injection ist.

9. System (105), das umfasst:
einen oder mehrere Computerprozessoren (305); und
einen Speicher (325), der ein Programm enthält, das, wenn es von einem oder mehreren der Computerprozessoren ausgeführt wird, konfiguriert ist, um einen Betrieb zum Filtern eines oder mehrerer Eingangsparameter durchzuführen, die einem Anwendungsserver (340) zur Verfügung gestellt werden, wobei der Betrieb umfasst:
Empfangen einer ersten Zeichenkette aus einem der Eingangsparameter (405);
Vergleichen jedes Zeichens in der ersten Zeichenkette mit einem Satz von Trigger- bzw. Ansteuerzeichen (525, 530, 535, 540, 545, 550), wobei jedes Zeichen in dem Satz von Ansteuerzeichen eine syntaktische Bedeutung hat, die betriebsfähig ist, um eine Verwundbarkeit in einer webbasierten Anwendung auszuwerten, und wobei jedes Ansteuerzeichen ein zugehöriges Nicht-Ansteuerungsersatzzeichen (525', 530', 535', 540', 545', 550') hat, welches ein visuelles Erscheinungsbild hat, das mit dem zugehörigen Ansteuerzeichen (420) ohne die syntaktische Bedeutung übereinstimmt;
Erzeugen einer modifizierten ersten Zeichenkette durch Austauschen jedes Zeichens in der ersten Zeichenkette, das mit einem der Ansteuerzeichen übereinstimmt, durch das zugehörige Nicht-Ansteuerungsersatzzeichen (435); und
Weitergeben der modifizierten ersten Zeichenkette an den Anwendungsserver (445).

10. System (105) nach Anspruch 9, wobei jedes Ansteuerzeichen (525, 530, 535, 540, 545, 550) einen Codepunkt in einem Zeichen hat, der verschieden zu dem zugehörigen Nicht-Ansteuerungsersatzzeichen (525', 530', 535', 540', 545', 550') festgelegt ist.

11. System (105) nach Anspruch 9, wobei der eine oder die mehreren Eingabeparameter dem Anwendungsserver (340) als Unicode-Textzeichenkette, die in einer HTML-Form abgeschickt wurde, oder dem Anwendungsserver als eine URL-Zeichenkette zur Verfügung gestellt werden.

12. System (105) nach Anspruch 9, wobei der Betrieb ferner umfasst:
Erzeugen einer Antwort, welche die modifizierte erste Zeichenkette umfasst, durch den Anwendungsserver (340); und
Senden der Antwort an ein dienstanforderndes Gerät bzw. einen Client (130).

13. System (105) nach Anspruch 9, wobei der Betrieb ferner umfasst:
Empfangen einer zweiten Zeichenkette aus einem zweiten der Eingabeparameter; und
Weitergeben der zweiten Zeichenkette an eine Anwendung zur Eingangsparametersäuberung (415).

14. System (105) nach Anspruch 13, wobei die zweite Zeichenkette Richt-Text mit einer oder mehreren Auszeichnungsmarkierungen umfasst, und wobei die Säuberungsanwendung konfiguriert ist, um spezifizierte Markierungen von der einen oder den mehreren Auszeichnungsmarkierungen auszuwerten und selektiv zu löschen.

15. System (400) nach Anspruch 9, wobei die erste Zeichenkette einen Versuch umfasst, eine Verwundbarkeit des Anwendungsservers (340) auszuwerten.

## Revendications

1. Procédé mis en oeuvre par ordinateur (400) pour filtrer un ou plusieurs paramètres d'entrée (515) fournis à un serveur d'application (115, 340), le procédé comprenant :
recevoir une première chaîne de caractères d'un des paramètres d'entrée (405) ;
comparer chaque caractère dans la première chaîne de caractères à un ensemble de caractères de déclenchement (525, 530, 535, 540, 545, 550), dans lequel chaque caractère dans l'ensemble de caractères de déclenchement a une signification syntaxique pour exploiter une vulnérabilité dans une application Web et dans lequel chaque caractère de déclenchement a un caractère de remplacement de non déclenchement associé (525', 530', 535', 540', 545', 550') qui a une apparence visuelle qui correspond au caractère de déclenchement associé (420) sans ladite signification syntaxique ;
générer une première chaîne modifiée de caractères en remplaçant chaque caractère dans la première chaîne de caractères qui correspond à un des caractères de déclenchement par le caractère de remplacement de non déclenchement associé (435) ; et
faire passer la première chaîne modifiée de caractères au serveur d'application (445).

2. Procédé (400) selon la revendication 1, dans lequel chaque caractère de déclenchement (525, 530, 535, 540, 545, 550) a un point de code dans un ensemble de caractères différent du caractère de remplacement de non déclenchement associé (525', 530', 535', 540', 545', 550').

3. Procédé (400) selon la revendication 1, dans lequel le ou les paramètres d'entrée sont fournis au serveur d'application (340) comme chaîne de texte Unicode publiée depuis un formulaire HTML ou fournie au serveur d'application comme chaîne URL.

4. Procédé (400) selon la revendication 1, comprenant en outre :
générer par le serveur d'application (340) une réponse qui inclut la première chaîne modifiée de caractères ; et
envoyer la réponse à un client (130).

5. Procédé (400) selon la revendication 1, comprenant en outre :
recevoir une seconde chaîne de caractères d'un second des paramètres d'entrée ; et
faire passer la seconde chaîne de caractères à une application de nettoyage de paramètre d'entrée (415).

6. Procédé (400) selon la revendication 5, dans lequel la seconde chaîne de caractères comprend du texte riche y compris une ou plusieurs balises HTML et dans lequel l'application de nettoyage est configurée pour évaluer et effacer sélectivement des balises spécifiées parmi la ou les balises HTML.

7. Procédé (400) selon la revendication 1, dans lequel la première chaîne de caractères inclut une tentative d'exploiter une vulnérabilité du serveur d'application (340).

8. Procédé (400) selon la revendication 7, dans lequel la vulnérabilité est une parmi une vulnérabilité CSS, une vulnérabilité d'injection SQL et une vulnérabilité d'injection d'en-tête HTTP.

9. Système (105) comprenant :
un ou plusieurs processeurs informatiques (305) ; et
une mémoire (325) contenant un programme qui, lors de son exécution par le ou
les processeurs informatiques, est configuré pour réaliser une opération afin de filtrer un ou plusieurs paramètres d'entrée fournis à un serveur d'application (340), l'opération comprenant :
recevoir une première chaîne de caractères d'un des paramètres d'entrée (405) ;
comparer chaque caractère dans la première chaîne de caractères à un ensemble de caractères de déclenchement (525, 530, 535, 540, 545, 550), dans lequel chaque caractère dans l'ensemble de caractères de déclenchement a une signification syntaxique pouvant opérer pour exploiter une vulnérabilité dans une application Web et dans lequel chaque caractère de déclenchement a un caractère de remplacement de non déclenchement associé (525', 530', 535', 540', 545', 550') qui a une apparence visuelle qui correspond au caractère de déclenchement associé (420) sans ladite signification syntaxique ;
générer une première chaîne modifiée de caractères en remplaçant chaque caractère dans la première chaîne de caractères qui correspond à un des caractères de déclenchement par le caractère de remplacement de non déclenchement associé (435) ; et
faire passer la première chaîne modifiée de caractères au serveur d'application (445).

10. Système (105) selon la revendication 9, dans lequel chaque caractère de déclenchement (525, 530, 535, 540, 545, 550) a un point de code dans un ensemble de caractères différent du caractère de remplacement de non déclenchement associé (525', 530', 535', 540', 545', 550').

11. Système (105) selon la revendication 9, dans lequel le ou les paramètres d'entrée sont fournis au serveur d'application (340) comme chaîne de texte Unicode publiée depuis un formulaire HTML ou fournie au serveur d'application comme chaîne URL.

12. Système (105) selon la revendication 9, dans lequel l'opération comprend en outre :
générer par le serveur d'application (340) une réponse qui inclut la première chaîne modifiée de caractères ; et
envoyer la réponse à un client (130).

13. Système (105) selon la revendication 9, dans lequel l'opération comprend en outre :
recevoir une seconde chaîne de caractères d'un second des paramètres d'entrée ; et
faire passer la seconde chaîne de caractères à une application de nettoyage de paramètre d'entrée (415).

14. Système (105) selon la revendication 13, dans lequel la seconde chaîne de caractères comprend du texte riche y compris une ou plusieurs balises HTML et dans lequel l'application de nettoyage est configurée pour évaluer et effacer sélectivement des balises spécifiées parmi la ou les balises HTML.

15. Système (105) selon la revendication 9, dans lequel la première chaîne de caractères inclut une tentative d'exploiter une vulnérabilité du serveur d'application (340).
